# EUROPEAN PATENT SPECIFICATION

(11) **EP 1 911 987 B1**
(45) Date of publication and mention of the grant of the patent: **26.09.2012**
(21) Application number: 07252599.1
(22) Date of filing: 27.06.2007
(51) Int. Cl.: F16D 15/00, F16D 41/26, F16D 41/28, F16D 41/36, F16D 13/54

(54) **Clutch operating assisting device**
Hilfsvorrichtung zum Antrieb einer Kupplung
Dispositif d'assistance de fonctionnement d'embrayage

(30) Priority: 05.07.2006 JP 2006185281
(43) Date of publication of application: 16.04.2008
(73) Proprietor: Yamaha Hatsudoki Kabushiki Kaisha, Iwata-shi, Shizuoka 438-8501 (JP)
(72) Inventor: Oishi, Akifumi c/o Yamaha Hatsudoki Kabushiki Kaisha, Iwata-shi, Shizuoka-ken 438-8501 (JP)
(74) Representative: Moreland, David

(56) References cited:
- DE-C- 851 875
- FR-A- 2 549 920
- US-A- 2 735 525
- US-A- 2 914 158

## Description

### FIELD OF THE INVENTION

The present invention relates to a clutch operation assisting device for reducing the operating force for operating a friction clutch when disengaging the transmission of torque by the friction clutch, and a power unit and a straddle-type vehicle that are equipped with the clutch operation assisting device.

### BACKGROUND TO THE INVENTION

A known power unit for a motorcycle or the like is equipped with a friction clutch for connecting/disconnecting the transmission of torque from an engine to a transmission. The friction clutch includes a clutch shaft, and a friction plate and a clutch plate that overlap each other in the axial direction of the clutch shaft (hereinafter, referred to as the clutch shaft direction). Further, the friction clutch includes a pressure plate which brings the friction plate and the clutch plate into pressure contact with each other, and a clutch spring for urging the pressure plate. Normally, by the above-mentioned clutch spring, the friction clutch is kept in a clutch-in state enabling the transmission of torque.

Further, the friction clutch has a clutch release mechanism. The clutch release mechanism serves to release the pressure of the pressure plate established by the clutch spring, and is connected to a clutch lever via a clutch wire. Accordingly, when the rider grips the clutch lever, the pressure plate is moved or slides against the urging force of the clutch spring, thus disengaging the transmission of torque from the friction plate to the clutch plate.

In the case of a friction clutch used in a high output/high RPM engine, in order to achieve increased torque capacity, it is desirable to set the mounting load of the clutch spring high. However, since the clutch lever is operated with a human hand, increased the mounting load of the clutch spring increases the burden on the rider when operating the clutch lever.

In an attempt to alleviate this problem, known clutch operation assisting devices exist in which an assist mechanism for reducing the operating force for operating the clutch lever is attached to a clutch release mechanism to which a clutch wire is connected. Such prior art arrangements are disclosed in, for example, prior art references JP 07-132872 and JP 55-094028.

The clutch operation assisting device disclosed in JP 07-132872 is arranged outside of a power unit. On the other hand, there is also a demand for such a clutch operation assisting device to be arranged inside the power unit. JP 55-094028 discloses a construction in which the clutch operation assisting device is arranged inside the power unit.

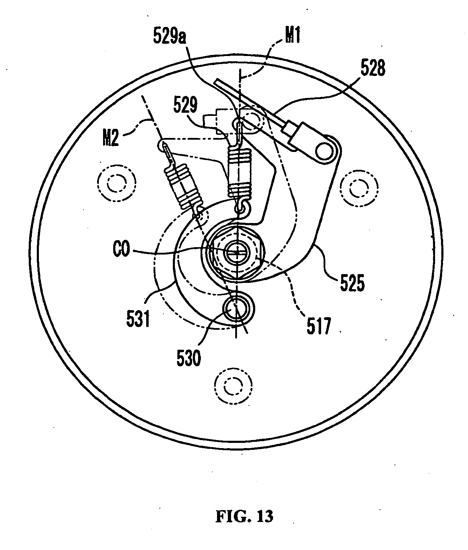

As shown in FIG. 13, a clutch operation assisting device similar to that disclosed in JP 55-094028 includes a rotatable push lever 525 connected to a clutch wire 528, and an auxiliary spring 529 for reducing the operating force for operating a clutch lever. One end 529a of the auxiliary spring 529 is connected to the push lever 525, and the other end of the auxiliary spring 529 is connected to a connecting member 531 that is formed in a semi-arcuate shape. The push lever 525 is fixed to a push screw 517 positioned on a straight line or axis (on the straight line extending in the direction from the front side to the back side of the plane of FIG. 13), and rotates integrally with the push screw 517. The connecting member 531 is rotatably supported on a pin 530, and rotates around the pin 530.

When the clutch lever is in a so-called freeplay condition (a condition where no load is exerted even when the clutch lever is pulled), as indicated by the solid line in FIG. 13, the auxiliary spring 529 is positioned on a straight line M1 connecting between the rotation center C0 of the push lever 525 and the pin 530. In other words, the expansion/contraction direction of the auxiliary spring 529 passes through the rotation center C0 of the push lever 525. Therefore, the urging force of the auxiliary spring 529 does not act as a force for rotating the push lever 525.

On the other hand, as indicated by the two-dot chain line in FIG. 13, when the clutch lever is pulled, the push lever 525 is pulled along and pivots counterclockwise. As a result, the attitude of the auxiliary spring 529 changes, and the expansion/contraction direction M2 of the auxiliary spring 529 shifts from the pivot center C0 of the push lever 525. A part of the urging force of the auxiliary spring 529 thus acts as a force for pivoting the push lever 525 counterclockwise. Therefore, the urging force of the auxiliary spring 529 acts as an assist force applied when pulling the clutch lever, thereby reducing the operating force for operating the clutch lever.

As described above, in the above-mentioned clutch operation assisting device, the auxiliary spring 529 changes its attitude while the clutch lever moves from an initial position where the clutch lever is in the freeplay condition to a disengage position for disengaging the friction clutch. In the initial position, the expansion/contraction direction M1 of the auxiliary spring 529 passes through the axial center (i.e., rotation center C0) of the push screw 517. Accordingly, in the clutch operation assisting device mentioned above, the auxiliary spring 529 must be installed along the radial direction from the axial center of the push screw 517, which makes it difficult to secure a sufficient installation space for the auxiliary spring 529. Further, it is difficult to secure a sufficient expansion/contraction length for the auxiliary spring 529. Therefore, in the clutch operation assisting device mentioned above, the power unit must be enlarged to secure a sufficient installation space for the auxiliary spring 529.

The present invention has been made in view of the above-mentioned problems, and accordingly it is an object of the present invention to achieve a reduction in the size of a power unit incorporating a clutch operation assisting device.

FR 2549920 discloses a device which functions as a clutch assembly and includes a number of crowns mounted about a shaft. A first crown is welded to the shaft and includes a number of cavities arranged to receive a ball when the clutch is engaged to couple and transmit a driving force to the shaft. A shifting arrangement includes a lever which pivots about a shaft wherein one end of the lever engages one of the crowns and an opposite end is coupled to a spring which biases the lever to maintain the clutch in a disengaged position. When the clutch is to be engaged, the lever is moved against the bias of the spring.

### SUMMARY OF THE INVENTION

The present invention relates to a power unit for a vehicle according to claim 1. Optional features of the present invention are presented in the dependent claims.

The power unit of the present invention may include a clutch operation assisting device adapted to be positioned between a clutch operating device and a

friction clutch having a pressure plate and a clutch spring for urging the pressure plate towards an engaged configuration, wherein the pressure plate is rotatable about a rotation axis, said clutch operation assisting device comprising:
a slide member adapted to rotatably support the pressure plate and slide in a predetermined direction together with the pressure plate;
a first rotary member adapted to be coupled to the clutch operating device via a transmission member, wherein the first rotary member rotates in accordance with the transmission member to cause the slide member to slide; and
an elastic member adapted to apply an urging force along a line of expansion/contraction against the first rotary member, wherein the orientation of the line of expansion/contraction changes during operation of the operating device and does not intersect the rotation axis of the pressure plate,
wherein the urging force causes the first rotary member to rotate in the direction for disengaging the friction clutch when the operating device is configured between a disengage start position and a disengage position.

The disengage start position occurs when the operating device is in a position to receive a reaction force of the clutch spring. The disengage position occurs when the operating device is in a position where disengagement of the friction clutch is complete.

The clutch operation assisting device may further comprise a second rotary member that rotates about a rotation axis to transmit the urging force of the elastic member to the first rotary member, wherein the rotation axis of the second rotary member and the rotation axis of the pressure plate are shifted from each other.

The first rotary member and the second rotary member may be rotatably coupled to each other such that a rotation angle of the first rotary member results in a larger rotation angle of the second rotary member.

The first rotary member may include a first connecting portion adapted to be coupled to the transmission member, and a second connecting portion coupled to the second rotary member, wherein the first connecting portion and the second connecting portion are positioned on opposite sides across the slide member.

The clutch operation assisting device may further comprise a support member for supporting the slide member, wherein the support member has a support portion for supporting one end side of the elastic member in a swingable manner.

The clutch operation assisting device may further comprise a support plate for supporting the slide member, the support plate being arranged between the friction clutch and the first rotary member. The support plate may include at least one hole formed therein.

At least a part of the elastic member may be inserted into one of the at least holes of the support plate. At least a part of the first rotary member may be inserted into one of the at least one holes of the support plate. At least a part of the second rotary member may be inserted into one of the at least one holes of the support plate.

The support plate may include first and second holes formed therein and positioned on opposite sides across the slide member.

The clutch operation assisting device may further comprise a cam plate having a cam surface extending in a direction orthogonal to the sliding direction of the slide member and in which a cam groove is formed, the cam plate being adapted to slide together with the slide member. The first rotary member may have a cam surface in which a cam groove is formed and which is faced to the cam surface of the cam plate. The clutch operation assisting device may further comprise a ball arranged between the cam groove of the cam plate and the cam groove of the first rotary member, the ball being adapted to cause the cam plate to slide in the sliding direction of the slide member as the first rotary member rotates.

The cam plate is provided at an outer end of the slide member and the first rotary member is arranged on an inner side with respect to the cam plate.

The first rotary member and the slide member may be connected to each other so as to slide integrally in the sliding direction of the slide member. The first rotary member may include a boss portion and the clutch operation assisting device may further comprise a support member for supporting the slide member, the support member having formed therein a guide hole into which the boss portion is inserted. The boss portion and the guide hole each may have formed therein a cam mechanism for guiding the first rotary member in the sliding direction of the slide member as the first rotary member rotates.

The first rotary member may have first gear teeth formed therein and the second rotary member may have formed therein second gear teeth that mesh with the first gear teeth within a plane orthogonal to the sliding direction of the slide member.

The elastic member may be configured such that when the operating member is in a return position located on a return side with respect to the disengage start position, the elastic member urges the first rotary member in a direction for engaging the friction clutch, and as the operating member is operated from the return position toward the disengage position via the disengage start position, a direction of urging force exerted on the first rotary member changes from the direction for engaging the friction clutch to the direction for disengaging the friction clutch.

The clutch operation assisting device may further comprise a canceling elastic member for, when the operating member is in the return position, applying an elastic force for canceling out the urging force of the auxiliary elastic member applied to the first rotary member.

The clutch operation assisting device may be adapted to be accommodated within a casing of the power unit.

A clutch assembly may include:
a clutch operating device;
a friction clutch having a pressure plate and a clutch spring for urging the pressure plate towards an engaged configuration, wherein the pressure plate is rotatable about a rotation axis; and
a clutch operating assisting device positioned between the cutch operating device and the friction clutch and comprising:
   a slide member rotatably supporting the pressure plate and adapted to slide in a predetermined direction together with the pressure plate;
   a first rotary member coupled to the clutch operating device via a transmission member, wherein the first rotary member rotates in accordance with the transmission member to cause the slide member to slide; and
   an elastic member adapted to apply an urging force along a line of expansion/contraction against the first rotary member, wherein the orientation of the line of expansion/contraction changes during operation of the operating device and does not intersect the rotation axis of the pressure plate, wherein the urging force causes the first rotary member to rotate in the direction for disengaging the friction clutch when the operating device is configured between a disengage start position and a disengage position.

The present invention relates to a power unit for a vehicle, comprising:
a friction clutch that has a pressure plate and a clutch spring for urging the pressure plate, and is connected via a transmission member to an operating device that is operated manually against an urging force of the clutch spring, wherein the pressure plate is rotatable about a rotation axis;
a slide member that rotatably supports the pressure plate and slides in a predetermined direction together with the pressure plate;
a first rotary member that is connected to the transmission member, and rotates in accordance with the transmission member to cause the slide member to slide;
an elastic member adapted to apply an urging force along a line of expansion/contraction against the first rotary member, wherein the orientation of the line of expansion/contraction changes during operation of the clutch operating device and does not intersect the rotation axis of the pressure plate, wherein the urging force causes the first rotary member to rotate in the direction for disengaging the friction clutch when the operating device is configured between a disengage start position and a disengage position; and
a casing that accommodates the friction clutch, the slide member, the first rotary member, and the auxiliary elastic member.

An aspect of the present invention relates to a straddle-type vehicle comprising the power unit defined above.

A clutch operation assisting device provided in a clutch operating apparatus may include:
a friction clutch that has a pressure plate and a clutch spring for urging the pressure plate, and is arranged in a casing of a power unit; and
an operating member that is connected to the friction clutch via a transmission member, and is manually operated against an urging force of the clutch spring when disengaging transmission of torque by the friction clutch,
the clutch operation assisting device being accommodated in the casing, comprising:
   a slide member that rotatably supports the pressure plate and slides in a predetermined direction together with the pressure plate;
   a first rotary member that is connected to the transmission member, and rotates in accordance with the transmission member to cause the slide member to slide; and
   an auxiliary elastic member for, when operating the operating member in a direction for disengaging the friction clutch, applying an urging force while changing in its expansion/contraction direction during a period of time until the operating member reaches a disengage position where disengagement of the friction clutch is complete from a disengage start position where the operating member receives a reaction force of the clutch spring, the urging force causing the first rotary member to rotate in the direction for disengaging the friction clutch,
wherein as viewed from a sliding direction of the slide member, the expansion/contraction direction of the auxiliary elastic member does not pass through the rotation center of the pressure plate.

According to the clutch operation assisting device mentioned above, since the line of expansion/contraction of the elastic member does not pass through the rotation center or axis of the pressure plate as viewed from the sliding direction of the slide member, there is no need to install the elastic member along the radial direction from the rotation center of the pressure plate. Therefore, the elastic member can be arranged without constraints with respect to the slide member. Accordingly, a large installation space can be secured for the elastic member without enlarging the power unit itself. Further, a large space can be secured for the expansion/contraction of the elastic member. As a result, the size of the power unit can be reduced.

As described above, according to the present invention, it is possible to achieve a reduction in the size of a power unit incorporating a clutch operation assisting device.

### BRIEF DESCRIPTION OF THE DRAWINGS

These and other aspects of the present invention will now be described in detail, by way of example only, with reference to the drawings, in which:
FIG. 1 is a left side view showing a part of a motorcycle;
FIG. 2 is a partially cut away sectional view of a power unit of the motorcycle of FIG. 1;
FIG. 3 is a sectional view of a clutch operation assisting device in accordance with a first embodiment of the present invention;
FIG. 4 (a) is a front view of a first rotary plate of the clutch operation assisting device of FIG. 3;
FIG. 4(b) is a front view of a cam plate of the clutch operation assisting device of FIG. 3;
FIG. 5 provides views showing a clutch operation assisting device according to the first embodiment of the present invention when a clutch lever is in a return position, of which FIG. 5(a) is a side view, and FIG. 5(b) is a sectional view;
FIG. 6 provides views showing the clutch operation assisting device according to the first embodiment when the clutch lever is in a disengage start position, of which FIG. 6(a) is a side view, and FIG. 6(b) is a sectional view;
FIG. 7 provides views showing the clutch operation assisting device according to the first embodiment when the clutch lever is in a disengage position, of which FIG. 7(a) is a side view, and FIG. 7(b) is a sectional view;
FIG. 8 is a side view of the clutch operation assisting device according to the first embodiment when the clutch lever is in the return position;
FIG. 9 provides views showing a clutch operation assisting device according to a second embodiment of the present invention when the clutch lever is in a return position, of which FIG. 9 (a) is a side view, and FIG. 9 (b) is a sectional view;
FIG. 10 provides views showing the clutch operation assisting device according to the second embodiment when the clutch lever is in a disengage start position, of which FIG. 10(a) is a side view, and FIG. 10(b) is a sectional view;
FIG. 11 provides views showing the clutch operation assisting device according to the second embodiment when the clutch lever is in a disengage position, of which FIG. 11(a) is a side view, and FIG. 11(b) is a sectional view;
FIG. 12 is a sectional view of a clutch operation assisting device according to a third embodiment of the present invention; and
FIG. 13 is a side view of a clutch operation assisting device according to the related art.

### DETAILED DESCRIPTION OF THE DRAWINGS

### First Embodiment

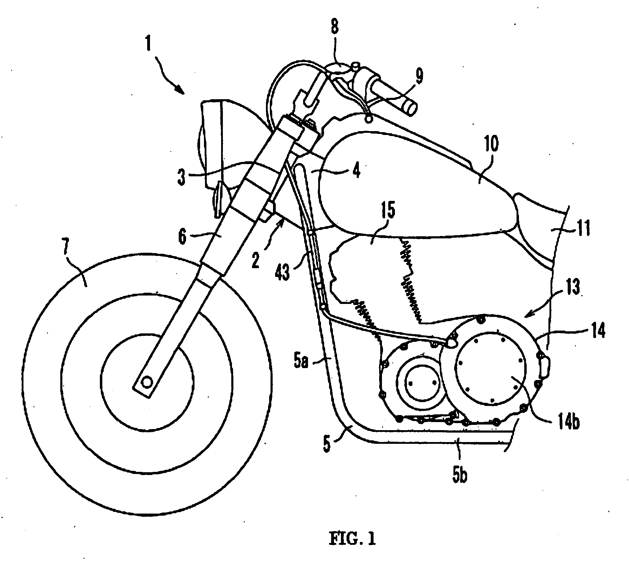

A motorcycle 1 shown in FIG. 1 includes a frame 2 which has a steering head pipe 3, a main frame member 4, and a down tube 5. The steering head pipe 3 supports a front fork 6. A steering handlebar 8 for steering a front wheel 7 is fixed to the upper end of the front fork 6. A clutch lever 9 as an example of an operating member or device is attached to a left end portion of the steering handlebar 8.

The main frame member 4 extends rearward from the steering head pipe 3, and supports a fuel tank 10 and a seat 11. The down tube 5 has a first portion 5a extending downward from the front end of the main frame member 4, and a second portion 5b extending rearward from the lower end of the first portion 5a.

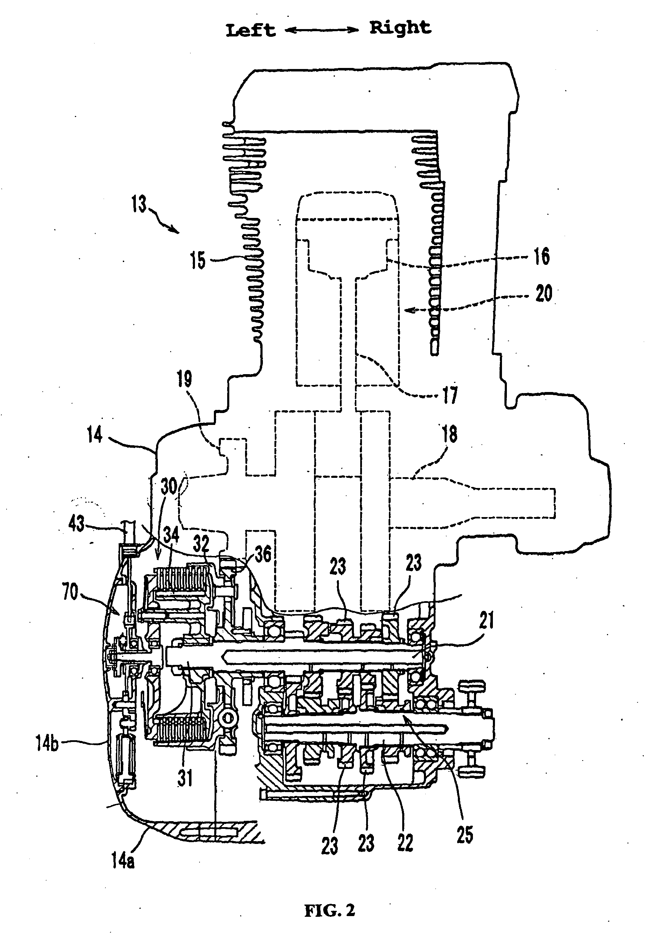

A power unit 13 is supported on the frame 2. The power unit 13 has a crankcase 14 and a cylinder 15. As will be described later, a friction clutch 30 (see FIG. 2) is accommodated in the crankcase 14. The clutch lever 9 and the friction clutch 30 are connected to each other via a clutch wire 43. The clutch lever 9, the clutch wire 43, and the friction clutch 30 constitute a clutch operating apparatus for manually connecting/disconnecting transmission of torque within the power unit 13.

As shown in Fig. 2, an engine 20 is provided inside the power unit 13. The engine 20 includes a piston 16, a crankshaft 18, and a connecting rod 17 connecting the piston 16 and the crankshaft 18. Inside the crankcase 14, a main shaft 21 and a drive shaft 22 are arranged in parallel to the crankshaft 18. A plurality of gears 23 are provided around the main shaft 21 and the drive shaft 22. The main shaft 21, the drive shaft 22, and the gears 23 form a transmission 25.

The friction clutch 30 is provided on the left end of the main shaft 21. Hereinbelow, for the sake of convenience, the portion of the main shaft 21 where the friction clutch 30 is provided will be referred to as a clutch shaft 31. It should be noted, however, that in this embodiment, the clutch shaft 31 is a part of the main shaft 21, and the clutch shaft 31 and the main shaft 21 are formed integrally with each other.

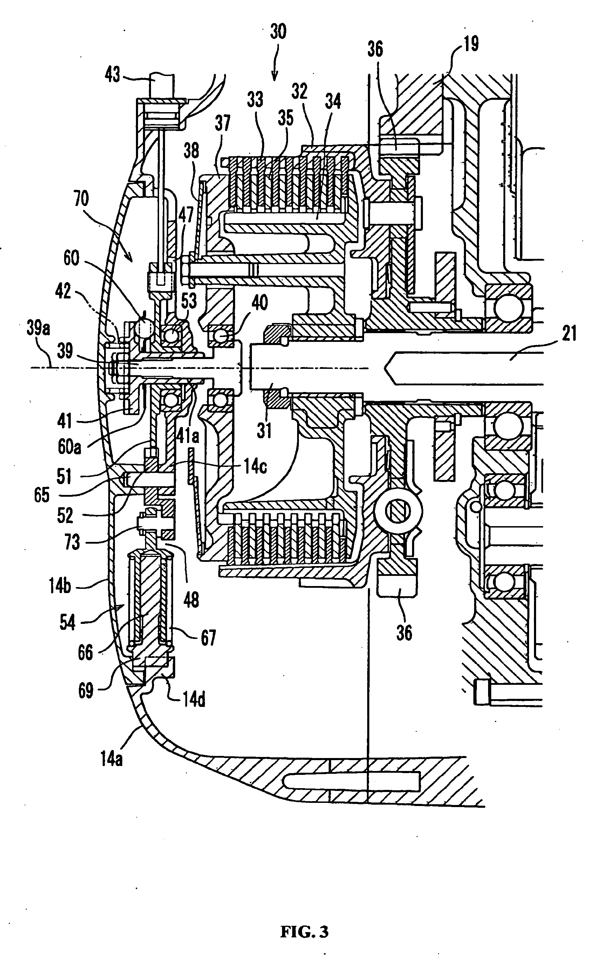

As shown in Fig. 3, the friction clutch 30 according to this embodiment is a multiplate wet friction clutch. It should be noted, however, that the friction clutch according to the present invention is not limited to a multiplate wet friction plate. The friction clutch 30 includes a clutch housing 32 and a clutch boss 34. The clutch housing 32 is rotatably supported on the clutch shaft 31. The clutch boss 34 is supported on the clutch shaft 31 so as to rotate integrally with the clutch shaft 31.

A plurality of friction plates 33 are provided in the clutch housing 32, and a plurality of clutch plates 35 are provided in the clutch boss 34. The friction plates 33 and the clutch plates 35 are arranged side by side in a staggered fashion along the axial direction (lateral direction) of the clutch shaft 31.

As shown in FIG. 2, a drive gear 19 is fixed to the left end of the crankshaft 18. A driven gear 36 is fixed to the clutch housing 32. The drive gear 19 and the driven gear 36 are in mesh with each other, so the driven gear 36 rotates in accordance with the drive gear 19. Accordingly, the clutch housing 32 rotates in accordance with the crankshaft 18. The drive gear 19 and the driven gear 36 constitute a speed reduction mechanism.

As shown in FIG. 3, a pressure plate 37 is arranged on the left side of the clutch shaft 31. A clutch spring 38 made of a diaphragm spring is attached to the pressure plate 37. It should be noted that the kind of the clutch spring 38 is not particularly limited. The pressure plate 37 is slidable in the axial direction of the clutch shaft 31, and is constantly urged by the clutch spring 38 to the clutch boss 34 side (the right side in Fig. 3). As the pressure plate 37 moves to the clutch boss 34 side to press on the friction plates 33, the friction plates 33 and the clutch plates 35 come into pressure contact with each other, thereby bringing the friction plate 30 into an engaged state (clutch-in state) . On the other hand, when the pressure plate 37 separates from the clutch boss 34, the pressure contact between the friction plates 33 and the clutch plates 35 is released, thereby bringing the friction clutch 30 into a disengaged state (clutch-out state).

The crankcase 14 includes a case body 14a having a bearing plate 14c, and a clutch cover 14b. The bearing plate 14c is arranged in the outer side (left side) of the pressure plate 37. The clutch cover 14b is arranged in the outer side of the bearing plate 14c. The clutch cover 14b covers the friction clutch 30 together with the bearing plate 14c. Further, the clutch cover 14b also covers a clutch operation assisting device 70 that will be described later.

A push shaft 39 is supported on the bearing plate 14c. The push shaft 39 is arranged on the same straight line as the clutch shaft 31 and on the outer side (left side) with respect to the clutch shaft 31. The pressure plate 37 is rotatably supported on the push shaft 39 via a bearing 40. Further, the pressure plate 37 is non-axially movable with respect to the push shaft 39, and slides axially in accordance with the push shaft 39. It should be noted that an imaginary line 39a in FIG. 3 indicates the centerline of rotation of the push shaft 39. The imaginary line 39a also corresponds to the centerline of rotation of the pressure plate 37.

A cam plate 41 is attached to the left end of the push shaft 39. It should be noted that while in this embodiment the push shaft 39 and the cam plate 41 are separate components, the push shaft 39 and the cam plate 41 may be formed integrally. That is, a part of the push shaft 39 may form the cam plate 41. In this embodiment, the cam plate 41 has a boss portion 41a. The push shaft 39 is fitted into the boss portion 41a. A compression coil spring 42 is arranged between the left side of the cam plate 41 and the clutch cover 14b. The cam plate 41 is constantly urged rightward by the compression coil spring 42.

The boss portion 41a of the cam plate 41 extends through the center hole of a first rotary plate 51. It should be noted that the boss portion 41a of the cam plate 41 is axially movable with respect to the first rotary plate 51. The first rotary plate 51 is rotatably supported on the bearing plate 14c via a bearing 53.

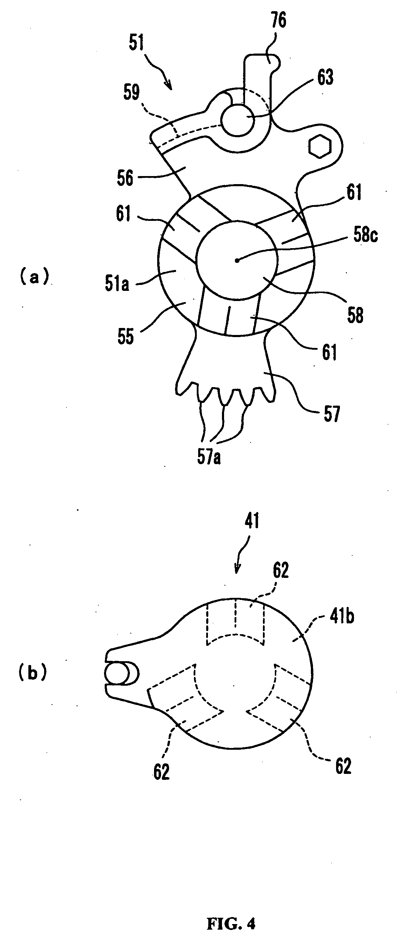

As shown in FIG. 4 (a), three cam grooves 61 are provided circumferentially in a front surface (the left-side surface in FIG. 3) 51a of the first rotary plate 51. As shown in FIG. 4 (b), similar cam grooves 62 are also formed in a back surface (the right-side surface in FIG. 3) 41b of the cam plate 41. The cam grooves 61, 62 are grooves with a substantially V-shaped cross section. As shown in FIG. 3, a ball 60 is arranged between the cam grooves 61 of the first rotary plate 51 and the cam grooves 62 of the cam plate 41. It should be noted that reference symbol 60a denotes a plate for preventing the ball 60 from dropping off. A so-called ball-cam type cam mechanism is formed by the cam grooves 61, 62 and the ball 60. That is, as the first rotary plate 51 rotates, the ball 60 moves in the cam grooves 61, 62, so the cam plate 41 is pushed to the left side by the ball 60. As a result, the pressure plate 37 slides to the left side together with the push shaft 39, thus bringing the friction clutch 30 into a disengaged state.

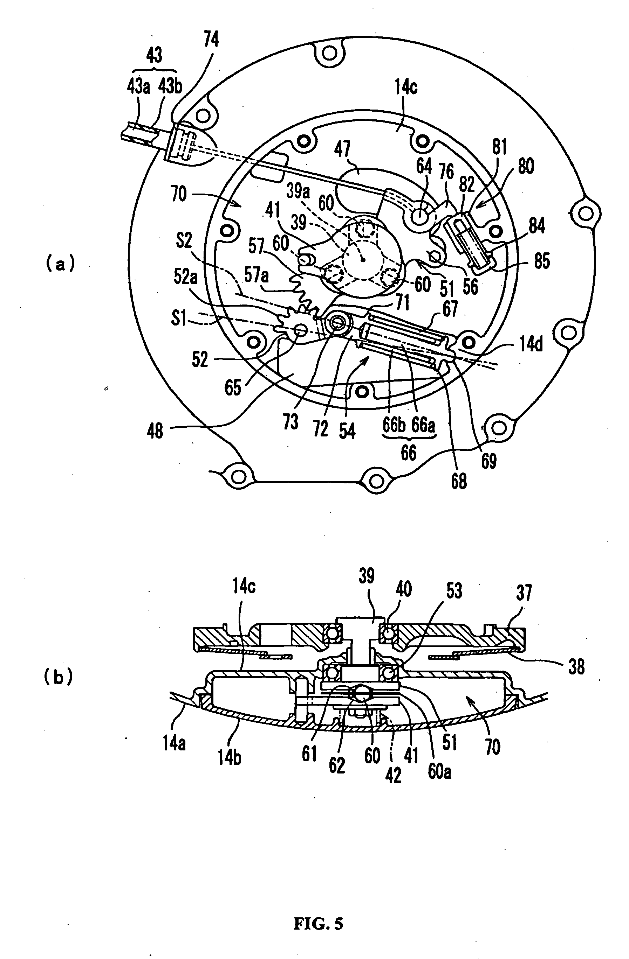

As shown in FIG. 5 (a), the clutch wire 43 includes an inner wire 43a made of metal, and an outer tube 43b made of synthetic resin that covers the inner wire 43a. The inner wire 43a is slidably inserted into the outer tube 43b, and is led out from an end of the outer tube 43b.

The clutch operation assisting device 70 includes, in addition to the above-described first rotary plate 51, a second rotary plate 52 and a spring unit 54. The first rotary plate 51 is formed by, for example, a stamped sheet metal part. As shown in FIG. 4(a), the first rotary plate 51 includes a substantially annular center portion 55, a wire connecting portion 56, and a gear portion 57. The wire connecting portion 56 and the gear portion 57 are positioned on opposite sides across the center portion 55.

In the center portion 55, there is formed a hole 58 through which the push shaft 39 is inserted. Further, the above-described cam grooves 61 are provided around the hole 58 of the center portion 55. An engagement groove 59 and an engagement hole 63 are formed in the wire connecting portion 56. The engagement groove 59 is a portion on which the inner wire 43a of the clutch wire 43 is wound. The engagement groove 59 is curved along a circular arc drawn about a center 58c of the hole 58. The engagement groove 59 is formed in an upwardly open, substantially U-shaped configuration in cross section. As shown in FIG. 5 (a), a cylindrical engaging member 64, which is fixed to the distal end of the inner wire 43a, is hooked on the engagement hole 63. Due to the above-mentioned construction, when the inner wire 43a is pulled, the first rotary plate 51 rotates counterclockwise about the push shaft 39.

The second rotary plate 52 is supported on the bearing plate 14c via a pivot shaft 65, and is rotatable about the pivot shaft 65. Teeth 52a are formed in the second rotary plate 52. The teeth 52a of the second rotary pate 52 are in mesh with teeth 57a of the gear portion 57 of the first rotary plate 51. By means of the teeth 52a and 57a, the first rotary plate 51 and the second rotary plate 52 are connected so as to allow mutual transmission of torque. Accordingly, the second rotary plate 52 rotates in accordance with the first rotary plate 51.

It should be noted that the distance from the rotation center (an axial center 39a of the push shaft 39) of the first rotary plate 51 to the teeth 57a is longer than the distance from the rotation center (axial center of the pivot shaft 65) of the second rotary plate 52 to the teeth 52a. Therefore, the first rotary plate 51 and the second rotary plate 52 are connected to each other such that the rotation angle of the first rotary plate 51 becomes larger than the rotation angle of the second rotary plate 52.

The spring unit 54 includes a spring holder 66 and an auxiliary spring 67. The spring holder 66 includes an inner tube 66a and an outer tube 66b. The inner tube 66a and the outer tube 66b are fitted with each other so as to be axially slidable. The spring holder 66 can expand and contract as the outer tube 66b slides along the inner tube 66a.

The inner tube 66a has a spring bearing 68 and a support end portion 69. The spring bearing 68 juts out in a flange-like shape from the outer peripheral surface at one end portion of the inner tube 66a. The support end portion 69 is formed at one end of the inner tube 66a, and is rotatably supported on a mounting seat 14d provided in the bearing plate 14c.

The outer tube 66b has a spring bearing 71 and a connecting end portion 72. The spring bearing 71 juts out in a flange-like shape from the outer peripheral surface at one end portion of the outer tube 66b. The connecting end portion 72 is formed at one end of the outer tube 66b, and is connected to one end of the second rotary plate 52 via a pin 73.

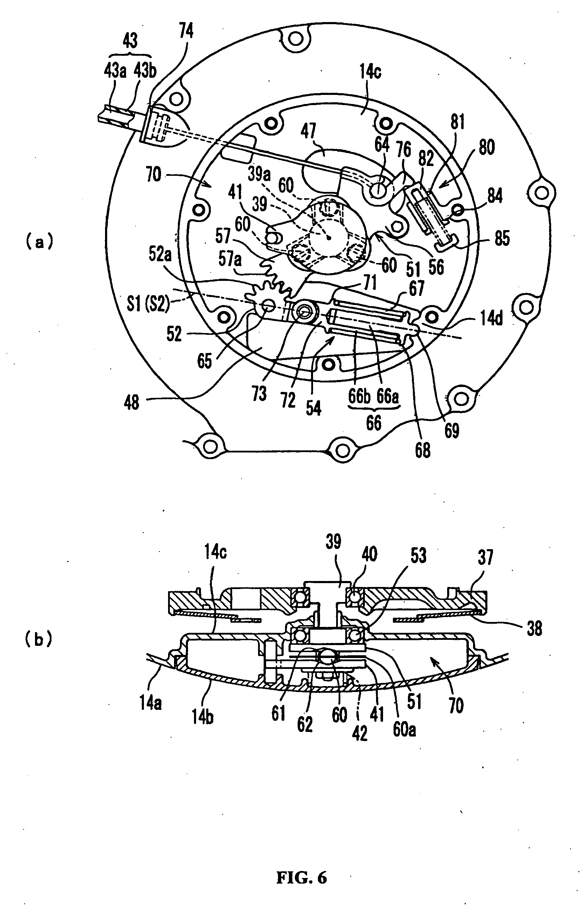

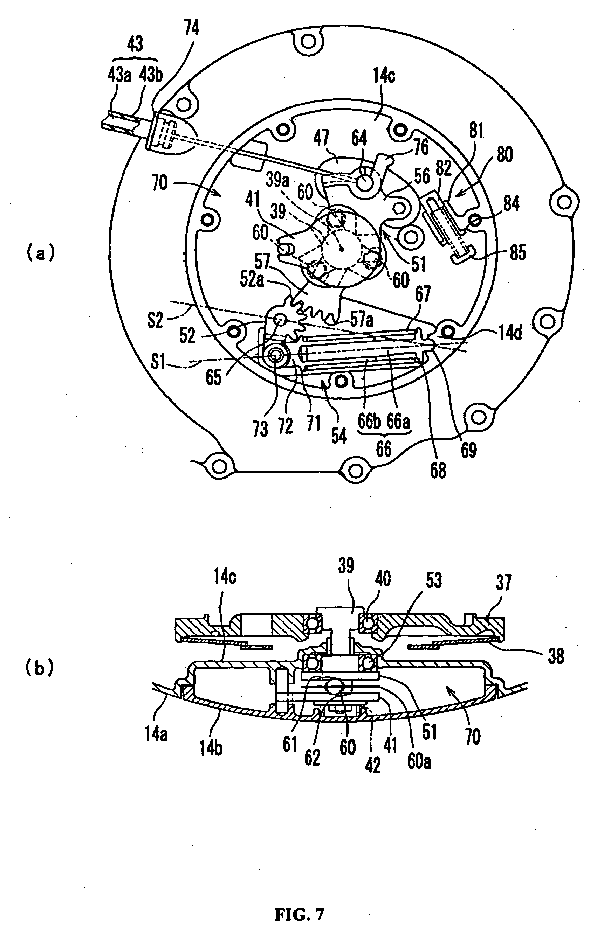

The auxiliary spring 67 is a compression spring. The auxiliary spring 67 is interposed in a compressed state between the spring bearing 68 of the inner tube 66a and the spring bearing 71 of the outer tube 66b. The spring holder 66 is thus constantly urged in an expanding direction. Further, the auxiliary spring 67 changes in its expansion/contraction direction S2 with the support end portion 69 taken as a fulcrum as it moves from a return position (see FIG. 5 (a)), which will be described later, to a disengage position (see FIG. 7(a)) via a disengage start position (see FIG. 6(a)). However, as viewed from the axial direction of the push shaft 39, the expansion/contraction direction S2 of the auxiliary spring 67 and the axial center 39a of the push shaft 39 do not cross each other at any position.

A wire lead-in port 74 is formed in the case body 14a of the crankcase 14. The clutch wire 43 is inserted into the wire lead-in port 74. The inner wire 43a of the clutch wire 43 is led into the crankcase 14 through the wire lead-in port 74 and connected to the wire connecting portion 56 of the first rotary plate 51.

In addition to a hole through which the push shaft 38 is passed, a first hole 47 and a second hole 48 are formed in the bearing plate 14c. The first hole 47 and the second hole 48 are positioned on opposite sides across the axial center 39a of the push shaft 39. A part of the wire connecting portion 56 of the first rotary plate 51 enters the first hole 47 (see FIG. 3). A part of the second rotary plate 52, and the spring unit 54 enter the second hole 48 (see FIG. 3).

The clutch lever 9 can be rotated between a return position in which the friction clutch 30 maintains the clutch-in state, and a disengage position in which the friction clutch 30 is in the clutch-off state. Further, a predetermined rotation range (for example, a rotation range in which the distal end of the clutch lever 9 moves by a distance of 10 to 15 mm) from the return position is a so-called freeplay range in which the clutch-off state is maintained even when the clutch lever 9 is gripped. In this freeplay range, the clutch wire 43 is pulled only slightly even when the clutch lever 9 is operated, so the urging force of the clutch spring 38 is not transmitted to the clutch lever 9. The end of the freeplay range of the clutch lever 9 corresponds to the disengage start position. In the disengage start position, the urging force of the clutch spring 38 is exerted on the clutch lever 9 via the clutch wire 43.

FIGs. 5(a) and 5(b) each show a state of the clutch operation assisting device 70 when the clutch lever 9 is in the return position. When the clutch lever 9 is in the return position, the pin 73 connecting between the second rotary plate 52 and the spring unit 54 is shifted to the upper side with respect to a straight line S1 that connects between the support end portion 69 of the spring holder 66 and the pivot shaft 65 of the second rotary plate 52.

When the rider operates the clutch lever 9 from the return position to the disengage start position, the first rotary plate 51 is pulled via the clutch wire 43, and the first rotary plate 51 rotates counterclockwise. Since the first rotary plate 51 and the second rotary plate 52 are gear-coupled to each other, the second rotary plate 52 then rotates clockwise. On the other hand, since the second rotary plate 52 and the spring unit 54 are pin-coupled to each other, the spring unit 54 rotates counterclockwise with the support end portion 69 as a fulcrum.

When the clutch lever 9 reaches the disengage start position, as shown in FIG. 6(a), the pin 73 is positioned on the straight line S1 connecting between the support end portion 69 of the spring holder 66 and the pivot shaft 65 of the second rotary plate 52. Therefore, the urging force of the auxiliary spring 67 does not act as a force for rotating the second rotary plate 52, and hence does not act as a force for rotating the first rotary plate 51.

When the clutch lever 9 is operated from the disengage start position toward the disengage position, the first rotary plate 51 further rotates counterclockwise. Then, as shown in FIG. 7 (b), the cam groove 61 of the first rotary plate 51 and the cam groove 62 of the cam plate 41 are shifted in position from each other, and the ball 60 moves in the both cam grooves 61, 62, so the cam plate 41 is pushed to the outer side. Further, as shown in FIG. 7(a), as the first rotary plate 51 rotates, the second rotary plate 52 further rotates clockwise, and the position of the pin 73 is shifted to the lower side with respect to the above-mentioned straight line S1. As a result, the spring holder 66 expands due to the urging force of the auxiliary spring 67 which acts as a force for rotating the second rotary plate 52 clockwise. As a result, the urging force of the auxiliary spring 67 functions as an assist force for rotating the first rotary plate 51 counterclockwise.

Accordingly, when the clutch lever 9 is operated past the disengage start position toward the disengage position, the first rotary plate 51 is forcibly rotated counterclockwise by means of the auxiliary spring 67. That is, the urging force of the auxiliary spring 67 is added to the operating force applied when the rider grips the clutch lever 9. The burden on the rider when operating the clutch lever 9 is thus reduced.

As described above, in the state when the clutch lever 9 is in the return position, as shown in FIG. 5(a), the position of the pin 73 is shifted to the upper side with respect to the straight line S1. Accordingly, due to the urging force of the auxiliary spring 67, the first rotary plate 51 is urged in the clockwise direction, that is, in a direction opposite to the direction for disengaging the friction clutch 30.

The above-mentioned force for urging the first rotary plate 51 in the clockwise direction serves as a reverse assist force acting against the force for rotating the clutch lever 9 from the return position to the disengage start position. Therefore, under these conditions, the initial input load required when initially gripping the clutch lever 9 increases.

In view of this, the clutch operation assisting device 70 according to this embodiment includes a canceling spring unit 80 for canceling out the above-mentioned reverse assist force. In this embodiment, a housing portion 81 for accommodating the canceling spring unit 80 is formed in the bearing plate 14c.

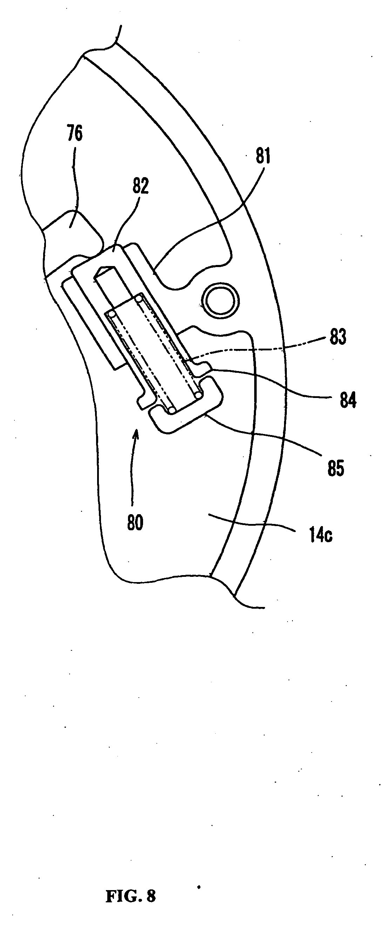

As shown in FIG. 8, the canceling spring unit 80 has a pressing pin 82 and a canceling spring 83. A flange-like stopper 84 is formed at the lower end of the pressing pin 82. The pressing pin 82 is inserted into the housing portion 81 from the lower side.

The bearing plate 14c is provided with a spring bearing 85 that supports the lower end of the canceling spring 83. The canceling spring 83 is a compression coil spring, and is interposed in a compressed state between the upper-end inner surface of the pressing pin 82 and the spring bearing 85. The canceling spring 83 constantly urges the pressing pin 82 obliquely upward along the longitudinal direction of the housing portion 81. The urging force of the canceling spring 83 is set to be slightly smaller than the counter assist force exerted by the auxiliary spring 67.

The pressing pin 82 is movable between a first position (see FIGs. 6 (a) and 7 (a)) where its upper end largely projects from the housing portion 81, and a second position (see FIG. 5(a)) where the upper end of the pressing pin 82 slightly projects from the housing portion 81. When in the first position, the stopper 84 of the pressing pin 82 abuts on the lower end of the housing portion 81 to thereby limit the position of the pressing pin 82. When in the second position, the stopper 84 of the pressing pin 82 abuts on the spring bearing 85 to thereby limit the position of the pressing pin 82.

During the period of time until the clutch lever 9 reaches the disengage start position from the return position, the upper end of the pressing pin 82 abuts on an abutting portion 76 of the first rotary plate 51 (see FIG. 5(a)). The first rotary plate 51 thus receives the urging force of the canceling spring 83. As a result, when the clutch lever 9 is in the range of freeplay, the total of the urging forces of the auxiliary spring 67 and the canceling spring 83 applied to the first rotary plate 51 becomes substantially zero, so the rotation of the first rotary plate 51 in the clockwise direction is restricted.

As the clutch lever 9 moves past the disengage start position and approaches the disengage position, the abutting portion 76 of the first rotary plate 51 separates from the upper end of the pressing pin 82 (see FIG. 7 (a)). As a result, the urging force of the canceling spring 83 applied to the first rotary plate 51 becomes zero, so the first rotary plate 51 is forcibly rotated counterclockwise by the urging force of the auxiliary spring 67.

As described above, the clutch operation assist device 70 according to this embodiment includes the push shaft 39, the first rotary plate 51, and the auxiliary spring 67. In this case, the push shaft 39 rotatably supports the pressure plate 37, and slides axially together with the pressure plate 37. The first rotary plate 51 is connected to the clutch wire 43, and rotates in accordance with the clutch wire 43, thereby causing the push shaft 39 to slide. When operating the clutch lever 9 in the direction for disengaging the friction clutch 30, during the period of time until the clutch lever 9 reaches the disengage position where the disengagement of the friction clutch 30 is complete from the disengage start position where the friction lever 9 receives the reaction force of the clutch spring 38, the auxiliary spring 67 applies an urging force for causing the first rotary plate 51 to rotate in the direction for disengaging the friction plate 30, while changing in its expansion/contraction direction S2. Further, the clutch operation assisting device 70 is configured such that as viewed from the axial direction (i.e., sliding direction) of the push shaft 39, the expansion/contraction direction S2 of the auxiliary spring 67 does not pass through the axial center 39a of the push shaft 39 (i.e., the rotation center of the pressure plate 37) (see FIG. 5 or the like).

Therefore, according to the clutch operation assisting device 70 of this embodiment, there is no need to install the auxiliary spring 67 along the radial direction from the axial center 39a of the push shaft 39, so the auxiliary spring 67 can be installed relatively freely without the constraint of the push shaft member 39. A large installation space can be thus secured for the auxiliary spring 67 without enlarging the crankcase 14 of the power unit 13. Accordingly, it is possible to achieve a reduction in the size of the power unit 13.

Further, since a large space can be secured for the expansion/contraction of the auxiliary spring 67, the expansion/contraction length of the auxiliary spring 67 can be increased. Thus, even without particularly using an expensive spring, a large expansion/contraction length can be secured, and hence a sufficient urging force can be obtained. Therefore, it is possible to achieve a reduction in the cost of the clutch operation assisting device 70.

Further, as shown in FIG. 5(a) or the like, the clutch operation assisting device 70 includes the pivot shaft 65 supported on the bearing plate 14c, and the second rotary plate 52 that is supported on the pivot shaft 65 and rotates to thereby transmit the urging force of the auxiliary spring 67 to the first rotary plate 51. Further, as viewed from the axial direction of the push shaft 39, the position of the pivot shaft 65 (it should be noted that the axial center of the pivot shaft 65 serves as the rotation center of the second rotary plate 52) and the position of the push shaft 39 are shifted from each other.

As described above, according to the clutch operation assisting device 70 of this embodiment, instead of connecting the spring unit 54 and the first rotary plate 51 directly to each other, the second rotary plate 52 for imparting the urging force of the auxiliary spring 67 to the first rotary plate 51 is interposed between the spring unit 54 and the first rotary plate 51. Constraints on the installation position of the auxiliary spring 67 are thus further reduced, thereby facilitating a reduction in the size of the power unit 13.

Further, in the clutch operation assisting device 70, the first rotary plate 51 and the second rotary plate 52 are connected to each other such that the rotation angle of the second rotary plate 52 becomes larger than the rotation angle of the first rotary plate 51.

Accordingly, torque is amplified as it is transmitted from the second rotary plate 52 to the first rotary plate 51. Therefore, the urging force required of the auxiliary spring 67 can be made small. As a result, a small-volume spring can be used, which makes it possible to achieve a reduction in the size or cost of the auxiliary spring 67.

Further, in this embodiment, the first rotary plate 51 includes the wire connecting portion 56 connected to the clutch wire 43, and the gear portion 57 connected to the second rotary plate 52. As viewed from the axial direction of the clutch shaft 31, the wire connecting portion 56 and the gear portion 57 are positioned on opposite sides across the push shaft 39.

Accordingly, with the clutch operation assisting device 70, the wire connecting portion 56 and the gear portion 57 can be arranged compact, thereby facilitating a reduction in the size of the power unit 13.

Further, in this embodiment, the bearing plate 14c has the mounting seat 14d that supports one end of the auxiliary spring 67 (specifically, the support end portion 69 of the spring holder 66) in a swingable manner.

Accordingly, the auxiliary spring 67 can be made to swing largely about one end of the auxiliary spring 67 as a fulcrum. A large urging force can be thus exerted even when the auxiliary spring 67 used is a relatively small one. It should be noted that the bearing plate 14c as a support member may directly support the auxiliary spring 67 or may indirectly support the auxiliary spring 67 via another member.

Further, the clutch operation assisting device 70 according to this embodiment includes the bearing plate 14c positioned between the friction clutch 30 and the first rotary plate 51, with the holes 47 and 48 being formed in the bearing plate 14c.

Accordingly, with the clutch operation assisting device 70, the first rotary plate 51 can be securely supported by the bearing plate 14c, thereby making it possible to secure a sufficient strength. Further, lubricating oil can be supplied from the friction clutch 30 side to the first rotary plate 51 side through the holes 47, 48. It is thus possible to reduce wear of the sliding portion of the clutch operation assisting device 70.

According to this embodiment, a part of the first rotary plate 51 (more specifically, a part of the wire connecting portion 56) is inserted into the hole 47 of the bearing plate 14c. Further, the auxiliary spring 67 is inserted into the hole 48 of the bearing plate 14c. Furthermore, a part of the second rotary plate 52 is also inserted into the hole 48.

Accordingly, the size of the power unit 13 with respect to the width direction (which corresponds to the axial direction of the push shaft 39 and is the lateral direction in this embodiment) can be reduced by the amount of overlap between the first rotary plate 51 and the bearing plate 14c. Further, the size of the power unit 13 can be reduced by the amount of overlap between the auxiliary spring 67 and the bearing plate 14c. Furthermore, the size of the power unit 13 can be reduced by the amount of overlap between the second rotary plate 52 and the bearing plate 14c. In this embodiment, the power unit 13 is disposed in a so-called horizontal placement, and the width direction of the power unit 13 coincides with the vehicle width direction. Downsizing of the motorcycle 1 can be thus facilitated.

According to this embodiment, as viewed from the axial direction of the push shaft 39, the first hole 47 and second hole 48 of the bearing plate 14c are positioned on opposite sides across the push shaft 39.

This allows the rigidity of the bearing plate 14c to be enhanced as compared with a case where both the holes 47 and 48 are arranged in a concentrated fashion on one side.

Further, the clutch operation assisting device 70 according to this embodiment includes the ball-cam type cam mechanism for causing the push shaft 39 to slide in accordance with the rotation of the first rotary plate 51. More specifically, the clutch operation assisting device 70 includes the cam plate 41 that slides axially together with the push shaft 39. The cam plate 41 has formed therein the cam surface 41b, which extends in a direction orthogonal to the push shaft 39 and in which the cam grooves 62 are formed. On the other hand, the first rotary plate 51 has formed therein the cam surface 51a, in which the cam grooves 61 are formed and which is faced to the cam surface 41b of the cam plate 41. Further, the clutch operation assisting device 70 is arranged between the cam grooves 62 of the cam plate 41 and the cam groves 61 of the first rotary plate 51, and includes the ball 60 for causing the cam plate 41 to slide in the axial direction of the push shaft 39 as the first rotary plate 51 rotates.

Accordingly, with the clutch operation assisting device 70 according to this embodiment, the first rotary plate 51 connected to the clutch wire 43 itself functions as a cam plate, so there is no need to additionally provide a pair of cam plates constituting a ball-cam type cam mechanism. Accordingly, the size of the power unit 13 with respect to the width direction can be reduced also in this respect. In addition, downsizing of the vehicle can be facilitated.

Further, in this embodiment, the cam plate 41 is provided at the outer end of the push shaft 39, and the first rotary plate 51 is arranged on the inner side with respect to the cam plate 41. Therefore, according to this embodiment, the first rotary plate 51 is arranged on the inner side with respect to the ball 60. Accordingly, the first rotary plate 51 can be arranged further inward, thereby facilitating a reduction in the size of the power unit 13.

According to this embodiment, the first gear teeth 57a are formed in the first rotary plate 51, and the second gear teeth 52a, which mesh with the first gear teeth 57a within a plane orthogonal to the push shaft 39, is formed in the second rotary plate 52. That is, the first rotary plate 51 and the second rotary plate 52 are gear-coupled to each other.

The first rotary plate 51 and the second rotary plate 52 thus rotate within the same plane. The total axial length of the first rotary plate 51 and second rotary plate 52 thus becomes small. It is thus possible to facilitate a reduction the size of the power unit 13 with respect to the width direction.

However, it is of course possible to connect the first rotary plate 51 and the second rotary plate 52 to each other by a cam mechanism or the like. The configuration of the connection between the first rotary plate 51 and the second rotary plate 52 is not limited to the one according to this embodiment.

Further, the clutch operation assisting device 70 according to this embodiment includes the canceling spring 83 which, when the clutch lever 9 is in the return position, applies an urging force for canceling out the urging force of the auxiliary spring 67 applied to the first rotary plate 51.

The load required for the initial operation of the clutch lever 9 can be thus reduced, thereby making it possible to achieve improved operability of the clutch lever 9.

### Second Embodiment

In a second embodiment of the present invention, the auxiliary spring 67 of the spring unit 54 according to the first embodiment is changed from a compression coil spring to a tension coil spring.

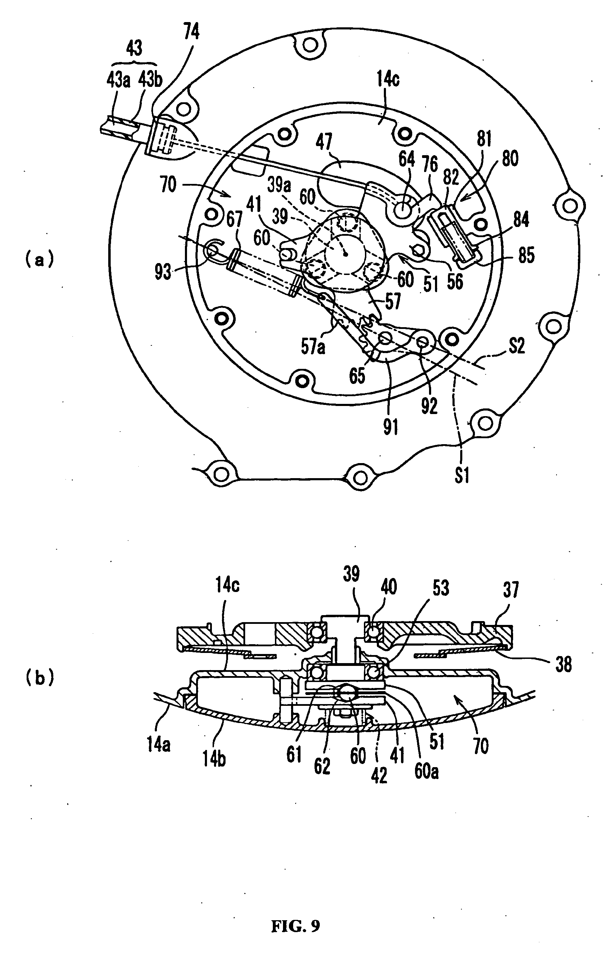

As shown in FIG. 9(a), the spring unit 54 according to the second embodiment includes an auxiliary spring 67 in the form of a tension coil spring, and a swing arm 91. One end of the auxiliary spring 67 is hooked onto a pin 93 provided to the bearing plate 14c. The other end of the auxiliary spring 67 is fixed to one end of the swing arm 91. The other end of the swing arm 91 is connected to the second rotary plate 52 by a pin 92. The swing arm 91 is rotatable with respect to the second rotary plate 52. Otherwise, the second embodiment is of the same construction as the first embodiment.

As shown in FIG. 9 (a), when the clutch lever 9 is in the return position, the pin 92 that connects the second rotary plate 52 and the spring unit 54 to each other is shifted to a position above the straight line S1 connecting between the pin 93 on one end side of the auxiliary spring 67, and the pivot shaft 65 of the second rotary plate 52.

When the rider operates the clutch lever 9 from the return position to the disengage start position, the first rotary plate 51 is pulled via the clutch wire 43, and the first rotary plate 51 rotates counterclockwise. As a result, the second rotary plate 52 rotates clockwise, and the spring unit 54 rotates clockwise about the pin 93 as a fulcrum.

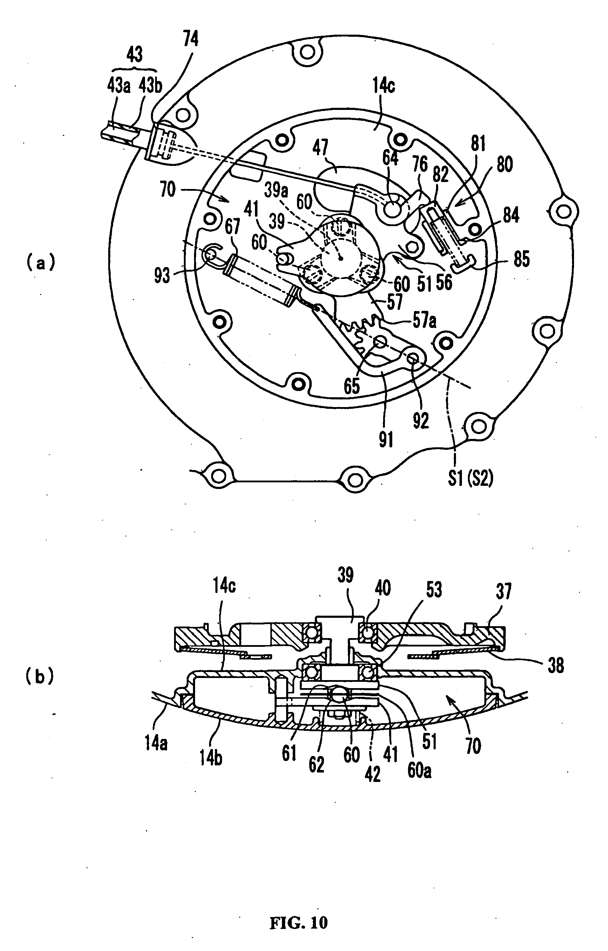

As shown in FIG. 10(a), when the clutch lever 9 reaches the disengage start position, the pin 92 is positioned on the straight line S1 connecting between the pin 93 and the pivot shaft 65. In this state, the urging force of the auxiliary spring 67 does not act as a force for rotating the second rotary plate 52. Therefore, the urging force of the auxiliary spring 67 does not act as a force for rotating the first rotary plate 51. It should be noted that as in the first embodiment, during the period of time until the clutch lever 9 reaches the disengage start position from the return position, the reverse assist force exerted by the auxiliary spring 67 is canceled out by the canceling spring unit 80.

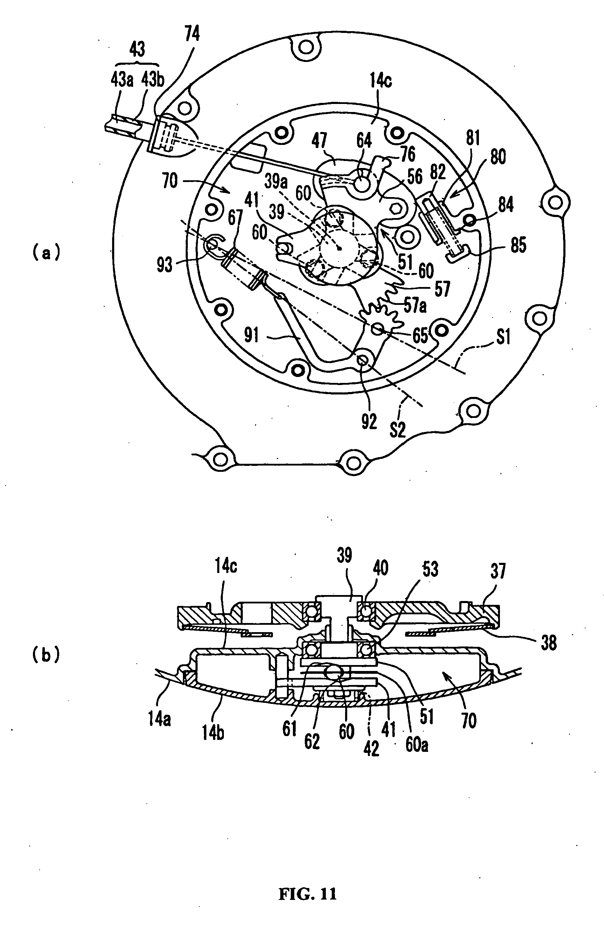

When the clutch lever 9 is operated from the disengage start position toward the disengage position, the first rotary plate 51 further rotates counterclockwise. Then, as shown in FIG. 11(b), the cam plate 41 is pushed to the outer side by the ball 60. Further, as shown in FIG. 11(a), due to the rotation of the first rotary plate 51, the second rotary plate 52 further rotates clockwise, so the position of the pin 92 is shifted to the lower side with respect to the straight line S1. As a result, the urging force of the auxiliary spring 67 acts as a force for rotating the second rotary plate 52 clockwise. Further, the urging force of the auxiliary spring 67 functions as an assist force for rotating the first rotary plate 51 counterclockwise.

Accordingly, when the clutch lever 9 is operated past the disengage start position toward the disengage position, the first rotary plate 51 is forcibly rotated counterclockwise by the auxiliary spring 67. That is, the urging force of the auxiliary spring 67 is added to the operating force applied when the rider grips the clutch lever 9. The burden on the rider when operating the clutch lever 9 is thus reduced.

In this embodiment as well, the auxiliary spring 67 expands/contracts while changing in its expansion/contraction direction as it moves from the return position to the disengage position via the disengage start position. Further, as viewed from the axial direction of the push shaft 39, the expansion/contraction direction S2 of the auxiliary spring 67 does not pass through the axial center 39a of the push shaft 39.

Therefore, in this embodiment as well, the same effect as that of the first embodiment can be attained.

### Third Embodiment

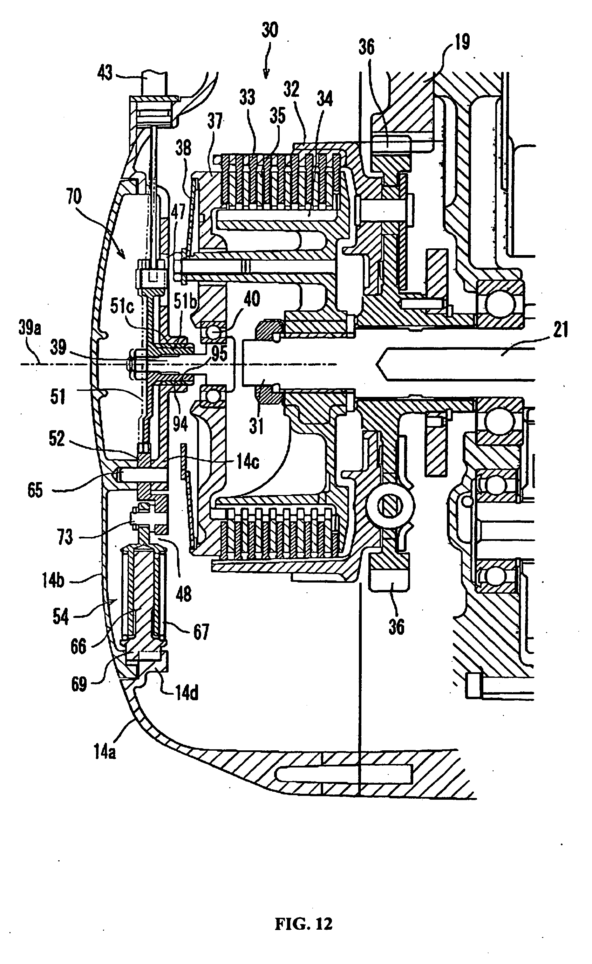

In the first and second embodiments, a ball-cam type cam mechanism is employed as the cam mechanism for causing the push shaft 39 to slide in accordance with the rotation of the first rotary plate 51. However, the cam mechanism for causing the push shaft 39 to slide in accordance with the rotation of the first rotary plate 51 is not limited to a ball-cam type cam mechanism. As shown in FIG. 12, in a third embodiment of the present invention, the above-mentioned cam mechanism is modified.

As shown in FIG. 12, in this embodiment, the first rotary plate 51 is provided with a boss portion 51b extending to the inner side (the friction clutch 30 side). A thread groove 51c is formed in the outer peripheral surface of the boss portion 51b. That is, a spiral groove is formed in the outer peripheral surface of the boss portion 51b.

A guide hole 95 is formed at the center portion of the bearing plate 14c. The boss portion 51b of the first rotary plate 51 is inserted into the guide hole 95. In the inner peripheral surface of the guide hole 95, there is formed a thread groove 94 that engages with the thread groove 51c of the boss portion 51b. The thread groove 94 is formed so as to guide the first rotary plate 51 in the axial direction (the lateral direction in FIG. 12) in accordance with the rotation of the first rotary plate 51.

In this embodiment, the first rotary plate 51 and the push shaft 39 are fixed, and the first rotary plate 51 slides in the axial direction integrally with the push shaft 39.

As described above, in this embodiment, the cam mechanism for causing the push shaft 39 to slide in accordance with the rotation of the first rotary plate 51 is formed by the thread groove 51c of the boss portion 51b of the first rotary plate 51, and the thread groove 94 of the guide hole 95 in the bearing plate 14c. Otherwise, the third embodiment is of the same construction as the first embodiment.

In this embodiment as well, the auxiliary spring 67 expands/contracts while changing in its expansion/contraction direction as it moves from the return position to the disengage position via the disengage start position. Further, as viewed from the axial direction of the push shaft 39, the expansion/contraction direction of the auxiliary spring 67 does not pass through the axial center 39a of the push shaft 39. Therefore, in this embodiment as well, the same effect as that of the first embodiment can be attained.

Further, according to this embodiment, as compared with the first embodiment, the cam plate 41 and the ball 60 become unnecessary. It is thus possible to achieve a further reduction in the size of the power unit 13 with respect to the width direction.

It should be noted that in this embodiment, the cam mechanism for causing the push shaft 39 to slide in accordance with the rotation of the first rotary plate 51 is formed by the thread groove 51c of the boss portion 51b of the first rotary plate 51, and the thread groove 94 of the guide hole 95 in the bearing plate 14c. However, the cam mechanism formed in the boss portion 51b and the guide hole 95 is not limited to a screw-type cam mechanism. For example, a configuration is also possible in which the outer peripheral surface of the boss portion 51b is provided with a radially protruding pin, and a spiral guide groove in which the above-mentioned pin is inserted is formed in the inner peripheral surface of the guide groove 95. The cam mechanism for causing the push shaft 39 to slide in accordance with the rotation of the first rotary plate 51 can be also formed by the pin and the guide groove as described above.

### Other Embodiments

In each of the above-mentioned embodiments, the clutch operation assisting device according to the present invention is applied to a motorcycle. However, the clutch operation assisting device according to the present invention is also applicable to straddle-type vehicles other than a motorcycle, and is also applicable to vehicles other than a straddle-type vehicle.

It should be noted that in the present invention, the pressure plate refers to a member for bring the friction plates and clutch plates of the friction clutch into pressure contact with each other, and is not limited to a plate-shaped member.

The clutch spring is not limited to a diaphragm spring, and may include other kinds of spring such as a coil spring.

In the above-mentioned embodiments, the push shaft 39 corresponds to the "slide member" of the present invention. However, the slide member is not limited to the push shaft 39. Any member may serve as the slide member as long as it rotatably supports the pressure plate 37 and slides in a predetermined direction together with the above-mentioned pressure plate 37. Further, the slide member may be either a single member or a combination of two or more members.

While in the above-mentioned embodiments the rotation center of the first rotary member (first rotary plate 51) and the rotation center of the pressure plate 37 coincide with each other as viewed from the sliding direction of the slide member (i.e., the axial direction of the push shaft 39), they may be shifted from each other. In that case, a seesaw-like member may be provided between the cam plate 41 and the push shaft 39. Accordingly, by rotating the first rotary member in accordance with a transmission member, the slide member can be made to slide. Otherwise, the mechanism for causing the slide member to slide may be of any type as long as it includes the first rotary member.

The "transmission member" according to the present invention is not limited to a wire-like member but may be a rod-like member as well.

The "elastic member" or "auxiliary elastic member" according to the present invention is not limited to a coil spring but may be other kinds of elastic member such as a gas spring.

In the above-mentioned embodiments, the first rotary plate 51 and the second rotary plate 52 are gear-coupled to each other. However, the first rotary plate 51 and the second rotary plate 52 may be connected to each other by other forms of connection such as link connection.

As described above, the present invention is useful for application to a clutch operation assisting device for reducing the operating force for operating a friction clutch, and a power unit and a saddle vehicle that are equipped with the clutch operation assisting device.

### Description of Reference Numerals and Symbols

1: motorcycle (straddle-type vehicle)
9: clutch lever (operating member)
13: power unit
14: crankcase (casing)
14c: bearing plate (support member)
30: friction clutch
37: pressure plate
38: clutch spring
39: push shaft (slide member)
39a: rotation center of pressure plate
43: clutch wire (transmission member)
51: first rotary plate (first rotary member)
52: second rotary plate (second rotary member)
54: spring unit
67: auxiliary spring (auxiliary elastic member)
70: clutch operation assisting device

## Claims

1. A power unit (13) for a vehicle (1), comprising:
a friction clutch (30) that has a pressure plate (37) and a clutch spring (38) for urging the pressure plate (37), and is connected via a transmission member (43) to an operating device (9) that is operated manually against an urging force of the clutch spring (38), wherein the pressure plate (37) is rotatable about a rotation axis (39a);
a slide member (39) that rotatably supports the pressure plate (37) and slides in a predetermined direction together with the pressure plate (37);
a first rotary member (51) that is connected to the transmission member (43), and rotates in accordance with the transmission member (43) to cause the slide member (37) to slide;
an elastic member (67) adapted to apply an urging force along a line of expansion/contraction (S2) against the first rotary member (51), wherein the orientation of the line of expansion/contraction (S2) changes during operation of the clutch operating device (9) and does not intersect the rotation axis (39a) of the pressure plate (37), wherein the urging force causes the first rotary member (51) to rotate in the direction for disengaging the friction clutch (30) when the operating device (9) is configured between a disengage start position and a disengage position; and
a casing (14) that accommodates the friction clutch (30), the slide member (39), the first rotary member (51), and the elastic member (67).

2. The power unit (13) according to Claim 1, further comprising a second rotary member (52) that rotates about a rotation axis to transmit the urging force of the elastic member (67) to the first rotary member (51),
wherein the rotation axis of the second rotary member (52) and the rotation axis (39a) of the pressure plate (37) are shifted from each other.

3. The power unit (13) according to Claim 2, wherein the first rotary member (51) and the second rotary member (52) are rotatably coupled to each other such that a rotation angle of the first rotary member (51) results in a larger rotation angle of the second rotary member (52).

4. The power unit (13) according to Claim 2 or 3, wherein the first rotary member (51) includes a first connecting portion (56) adapted to be coupled to the transmission member (43), and a second connecting portion (57) coupled to the second rotary member (52), wherein the first connecting portion (56) and the second connecting portion (57) are positioned on opposite sides across the slide member (39).

5. The power unit (13) according to any preceding Claim, further comprising a support member (14c) for supporting the slide member (39), wherein the support member (14c) has a support portion (14d) for supporting one end side of the elastic member (67) in a swingable manner.

6. The power unit (13) according to any preceding Claim, further comprising a support plate (14c) for supporting the slide member (39), the support plate (14c) being arranged between the friction clutch (30) and the first rotary member (51).

7. The power unit (13) according to claim 6, wherein the support plate (14c) includes at least one hole (47, 48) formed therein.

8. The power unit (13) according to Claim 7, wherein at least a part of the elastic member (67) is inserted into one of the at least one holes (47, 48) of the support plate (14c).

9. The power unit (13) according to Claim 7 or 8, wherein at least a part of the first rotary member (51) is inserted into one of the at least one holes (47, 48) of the support plate (14c).

10. The power unit (13) according to Claim 7, 8 or 9, wherein at least a part of the second rotary member (52) is inserted into one of the at least one holes (47, 48) of the support plate (14c).

11. The power unit (13) according to any one of Claims 6 to10, wherein the support plate (14c) includes first and second holes (47, 48) formed therein and positioned on opposite sides across the slide member (39).

12. The power unit (13) according to any preceding Claim, further comprising a cam plate (41) having a cam surface (41b) extending in a direction orthogonal to the sliding direction of the slide member (39) and in which a cam groove (62) is formed, the cam plate (41) being adapted to slide together with the slide member (39), wherein:
the first rotary member (51) has a cam surface in which a cam groove (61) is formed and which is faced to the cam surface (41b) of the cam plate (41); and
the power unit (13) further comprises a ball (60) arranged between the cam groove (62) of the cam plate (41) and the cam groove (61) of the first rotary member (51), the ball (60) being adapted to cause the cam plate (41) to slide in the sliding direction of the slide member (39) as the first rotary member (51) rotates.

13. The power unit (13) according to Claim 12, wherein the cam plate (41) is provided at an outer end of the slide member (39) and the first rotary member (51) is arranged on an inner side with respect to the cam plate (41).

14. The power unit (13) according to any preceding Claim, wherein:
the first rotary member (51) and the slide member (39) are connected to each other so as to slide integrally in the sliding direction of the slide member (39);
the first rotary member (51) includes a boss portion (51b) ;
the power unit (13) further comprises a support member (14c) for supporting the slide member (39), the support member (14c) having formed therein a guide hole (95) into which the boss portion (51b) is inserted; and
the boss portion (51b) and the guide hole (95) each have formed therein a cam mechanism for guiding the first rotary member (51) in the sliding direction of the slide member (39) as the first rotary member (51) rotates.

15. The power unit (13) according to any one of Claims 2 to 14, wherein:
the first rotary member (51) has first gear teeth (57a) formed therein; and
the second rotary member (52) has formed therein second gear teeth (52a) that mesh with the first gear teeth (57a) within a plane orthogonal to the sliding direction of the slide member (39).

16. The power unit (13) according to any preceding Claim, wherein:
the elastic member (67) is configured such that when the operating device (9) is in a return position located on a return side with respect to the disengage start position, the elastic member (67) urges the first rotary member (51) in a direction for engaging the friction clutch (30), and as the operating device (9) is operated from the return position toward the disengage position via the disengage start position, a direction of urging force exerted on the first rotary member (51) changes from the direction for engaging the friction clutch (30) to the direction for disengaging the friction clutch (30); and
the power unit (13) further comprises a canceling elastic member (80) for, when the operating device (9) is in the return position, applying an elastic force for canceling out the urging force of the elastic member (67) applied to the first rotary member (51).

17. A straddle-type vehicle (1) comprising the power unit (13) for a vehicle as set forth in any preceding Claim.

## Patentansprüche

1. Antriebseinheit (13) für ein Fahrzeug (1), die aufweist:
eine Reibungskupplung (30), die eine Druckplatte (37) und eine Kupplungsfeder (38) für das Treiben der Druckplatte (37) aufweist, und die mittels eines Transmissionsgliedes (43) mit einem Betätigungselement (9) verbunden ist, das manuell gegen eine Treibkraft der Kupplungsfeder (38) betätigt wird, wobei die Druckplatte (37) um eine Rotationsachse (39a) drehbar ist;
ein Schiebeelement (39), das drehbar die Druckplatte (37) trägt und sich in einer vorgegebenen Richtung zusammen mit der Druckplatte (37) verschiebt;
ein erstes Rotationselement (51), das mit dem Transmissionsglied (43) verbunden ist und sich in Übereinstimmung mit dem Transmissionsglied (43) dreht, um das Verschieben des Schiebeelementes (37) zu veranlassen;
ein elastisches Element (67), das ausgebildet ist, um eine Treibkraft längs einer Linie der Expansion/Zusammenziehung (S2) am ersten Rotationselement (51) zur Anwendung zu bringen, wobei sich die Ausrichtung der Linie der Expansion/Zusammenziehung (S2) während des Betriebes des Kupplungsbetätigungselementes (9) verändert und sich nicht mit der Rotationsachse (39a) der Druckplatte (37) schneidet, wobei die Treibkraft veranlasst, dass sich das erste Rotationselement (51) in der Richtung für das Auskuppeln der Reibungskupplung (30) dreht, wenn das Betätigungselement (9) zwischen einer Auskupplungsstartposition und einer Auskupplungsposition ausgebildet ist; und
ein Gehäuse (14), das die Reibungskupplung (30), das Schiebeelement (39), das erste Rotationselement (51) und das elastische Element (67) aufnimmt.

2. Antriebseinheit (13) nach Anspruch 1, die außerdem ein zweites Rotationselement (52) aufweist, das sich um eine Rotationsachse dreht, um die Treibkraft des elastischen Elementes (67) auf das erste Rotationselement (51) zu übertragen,
wobei die Rotationsachse des zweiten Rotationselementes (52) und die Rotationsachse (39a) der Druckplatte (37) voneinander verschoben sind.

3. Antriebseinheit (13) nach Anspruch 2, bei der das erste Rotationselement (51) und das zweite Rotationselement (52) drehbar miteinander gekuppelt sind, so dass ein Rotationswinkel des ersten Rotationselementes (51) zu einem größeren Rotationswinkel des zweiten Rotationselementes (52) führt.

4. Antriebseinheit (13) nach Anspruch 2 oder 3, bei der das erste Rotationselement (51) einen ersten Verbindungsabschnitt (56), der ausgebildet ist, damit er mit dem Transmissionsglied (43) gekuppelt wird, und einen zweiten Verbindungsabschnitt (57) umfasst, der mit dem zweiten Rotationselement (52) gekuppelt wird, wobei der erste Verbindungsabschnitt (56) und der zweite Verbindungsabschnitt (57) auf entgegengesetzten Seiten über das Schiebeelement (39) positioniert sind.

5. Antriebseinheit (13) nach einem der vorhergehenden Ansprüche, die außerdem ein Trägerelement (14c) für das Tragen des Schiebeelementes (39) aufweist, wobei das Trägerelement (14c) einen Trägerabschnitt (14d) für das Tragen einer Endseite des elastischen Elementes (67) in einer schwenkbaren Weise aufweist.

6. Antriebseinheit (13) nach einem der vorhergehenden Ansprüche, die außerdem eine Trägerplatte (14c) für das Tragen des Schiebeelementes (39) aufweist, wobei die Trägerplatte (14c) zwischen der Reibungskupplung (30) und dem ersten Rotationselement (51) angeordnet ist.

7. Antriebseinheit (13) nach Anspruch 6, bei der die Trägerplatte (14c) mindestens ein darin ausgebildetes Loch (47, 48) umfasst.

8. Antriebseinheit (13) nach Anspruch 7, bei der mindestens ein Teil des elastischen Elementes (67) in eines von mindestens einem Loch (47, 48) der Trägerplatte (14c) eingesetzt wird.

9. Antriebseinheit (13) nach Anspruch 7 oder 8, bei der mindestens ein Teil des ersten Rotationselementes (51) in eines von mindestens einem Loch (47, 48) der Trägerplatte (14c) eingesetzt wird.

10. Antriebseinheit (13) nach Anspruch 7, 8 oder 9, bei der mindestens ein Teil des zweiten Rotationselementes (52) in eines von mindestens einem Loch (47, 48) der Trägerplatte (14c) eingesetzt wird.

11. Antriebseinheit (13) nach einem der Ansprüche 6 bis 10, bei der die Trägerplatte (14c) ein erstes und zweites Loch (47, 48) umfasst, die darin ausgebildet und auf entgegengesetzten Seiten über das Schiebeelement (39) positioniert sind.

12. Antriebseinheit (13) nach einem der vorhergehenden Ansprüche, die außerdem eine Nockenscheibe (41) mit einer Nockenfläche (41b) aufweist, die sich in einer Richtung orthogonal zur Verschieberichtung des Schiebeelementes (39) erstreckt, und in der eine Kurvennut (62) ausgebildet ist, wobei die Nockenscheibe (41) ausgebildet ist, um sich zusammen mit dem Schiebeelement (39) zu verschieben, wobei:
das erste Rotationselement (51) eine Nockenfläche aufweist, in der eine Kurvennut (61) ausgebildet ist, und die zur Nockenfläche (41b) der Nockenscheibe (41) hin liegt; und
die Antriebseinheit (13) außerdem eine Kugel (60) aufweist, die zwischen der Kurvennut (62) der Nockenscheibe (41) und der Kurvennut (61) des ersten Rotationselementes (51) angeordnet ist, wobei die Kugel (60) ausgebildet ist, um zu veranlassen, dass sich die Nockenscheibe (41) in der Verschieberichtung des Schiebeelementes (39) verschiebt, während sich das erste Rotationselement (51) dreht.

13. Antriebseinheit (13) nach Anspruch 12, bei der die Nockenscheibe (41) an einem äußeren Ende des Schiebeelementes (39) vorhanden ist und das erste Rotationselement (51) auf einer Innenseite mit Bezugnahme auf die Nockenscheibe (41) angeordnet ist.

14. Antriebseinheit (13) nach einem der vorhergehenden Ansprüche, bei der:
das erste Rotationselement (51) und das Schiebeelement (39) miteinander verbunden sind, um sich so zusammenhängend in der Verschieberichtung des Schiebeelementes (39) zu verschieben;
das erste Rotationselement (51) einen Nabenabschnitt (51b) umfasst;
die Antriebseinheit (13) außerdem ein Trägerelement (14c) für das Tragen des Schiebeelementes (39) aufweist, wobei das Trägerelement (14c) darin ein Führungsloch (95) ausgebildet aufweist, in das der Nabenabschnitt (51b) eingesetzt wird; und
der Nabenabschnitt (51b) und das Führungsloch (95) jeweils darin ausgebildet einen Nockenmechanismus für das Führen des ersten Rotationselementes (51) in der Verschieberichtung des Schiebeelementes (39) aufweisen, während sich das erste Rotationselement (51) dreht.

15. Antriebseinheit (13) nach einem der Ansprüche 2 bis 14, bei der:
das erste Rotationselement (51) darin ausgebildete erste Zahnradzähne (57a) aufweist; und
das zweite Rotationselement (52) darin ausgebildete zweite Zahnradzähne (52a) aufweist, die mit den ersten Zahnradzähnen (57a) innerhalb einer Ebene orthogonal zur Verschieberichtung des Schiebeelementes (39) in Eingriff kommen.

16. Antriebseinheit (13) nach einem der vorhergehenden Ansprüche, bei der:
das elastische Element (67) so ausgebildet ist, dass, wenn sich das Betätigungselement (9) in einer Rückführposition befindet, die auf einer Rückführseite mit Bezugnahme auf die Auskupplungsstartposition angeordnet ist, das elastische Element (67) das erste Rotationselement (51) in einer Richtung für das Kuppeln der Reibungskupplung (30) treibt, und, während das Betätigungselement (9) aus der Rückführposition in Richtung der Auskupplungsposition über die Auskupplungsstartposition betätigt wird, sich eine Richtung der auf das erste Rotationselement (51) ausgeübten Treibkraft von der Richtung für das Kuppeln der Reibungskupplung (30) in die Richtung für das Auskuppeln der Reibungskupplung (30) verändert; und
die Antriebseinheit (13) außerdem ein ausgleichendes elastisches Element (80) für das Anwenden einer elastischen Kraft für das Ausgleichen der am ersten Rotationselement (51) angewandten Treibkraft des elastischen Elementes (67) aufweist, wenn sich das Betätigungselement (9) in der Rückführposition befindet.

17. Grätschsitz-Fahrzeug (1), das die Antriebseinheit (13) für ein Fahrzeug nach einem der vorhergehenden Ansprüche aufweist.

## Revendications

1. Unité de puissance (13) pour un véhicule (1), comprenant :
un embrayage à friction (30), comportant un plateau d'embrayage (37) et un ressort d'embrayage (38) pour pousser le plateau d'embrayage (37), et connecté par l'intermédiaire d'un élément de transmission (43) à un dispositif opérationnel (9) actionné manuellement contre une force de poussée du ressort d'embrayage (38), le plateau d'embrayage (37) pouvant tourner sur un axe de rotation (39a) ;
un élément coulissant (39), supportant de manière rotative le plateau d'embrayage (37) et glissant dans une direction prédéterminée ensemble avec le plateau d'embrayage (37) ;
un premier élément rotatif (51), connecté à l'élément de transmission (43) et tournant avec l'élément de transmission (43) pour entraîner le glissement de l'élément coulissant (37) ;
un élément élastique (67), adapté pour appliquer une force de poussée le long d'une ligne de dilatation/contraction (S2) contre le premier élément rotatif (51), l'orientation de la ligne de dilatation/contraction (S2) changeant au cours du fonctionnement du dispositif opérationnel de l'embrayage (9) et ne coupant pas l'axe de rotation (39a) du plateau d'embrayage (37), la force de poussée entraînant la rotation du premier élément rotatif (51) dans la direction du débrayage de l'embrayage à friction (30) lorsque le dispositif opérationnel (9) est configuré entre une position de début de débrayage et une position de débrayage ; et
un carter (14), recevant l'embrayage à friction (30), l'élément coulissant (39), le premier élément rotatif (51) et l'élément élastique (67).

2. Unité de puissance (13) selon la revendication 1, comprenant en outre un deuxième élément rotatif (52), tournant sur un axe de rotation pour transmettre la force de poussée de l'élément élastique (67) vers le premier élément rotatif (51) ;
l'axe de rotation du deuxième élément rotatif (52) et l'axe de rotation (39a) du plateau d'embrayage (37) étant décalés l'un par rapport à l'autre.

3. Unité de puissance (13) selon la revendication 2, dans laquelle le premier élément rotatif (51) et le deuxième élément rotatif (52) sont accouplés de manière rotative l'un à l'autre, de sorte qu'un angle de rotation du premier élément rotatif (51) entraîne un angle de rotation plus grand du deuxième élément rotatif (52).

4. Unité de puissance (13) selon la revendication 2 ou 3, dans laquelle le premier élément rotatif (51) englobe une première partie de connexion (56), adaptée pour être accouplée à l'élément de transmission (43), et une deuxième partie de connexion (57) accouplée au deuxième élément rotatif (52), la première partie de connexion (56) et la deuxième partie de connexion (57) étant positionnées sur des côtés opposés à travers l'élément coulissant (39).

5. Unité de puissance (13) selon l'une quelconque des revendications précédentes, comprenant en outre un élément de support (14c) pour supporter l'élément coulissant (39), l'élément de support (14c) comportant une partie de support (14d) pour supporter un côté d'extrémité de l'élément élastique (67) d'une manière pivotante.

6. Unité de puissance (13) selon l'une quelconque des revendications précédentes, comprenant en outre une plaque de support (14c) pour supporter l'élément coulissant (39), la plaque de support (14c) étant agencée entre l'embrayage à friction (30) et le premier élément rotatif (51).

7. Unité de puissance (13) selon la revendication 6, dans laquelle la plaque de support (14c) englobe au moins un trou (47, 48) qui y est formé.

8. Unité de puissance (13) selon la revendication 7, dans laquelle au moins une partie de l'élément élastique (67) est insérée dans au moins un des au moins un trous (47, 48) de la plaque de support (14c).

9. Unité de puissance (13) selon la revendication 7 ou 8, dans laquelle au moins une partie du premier élément rotatif (51) est insérée dans au moins un des au moins un trou (47, 48) de la plaque de support (14c).

10. Unité de puissance (13) selon la revendication 7, 8 ou 9, dans laquelle au moins une partie du deuxième élément rotatif (52) est insérée dans au moins un des au moins un trous (47, 48) de la plaque de support (14c).

11. Unité de puissance (13) selon l'une quelconque des revendications 6 à 10, dans laquelle la plaque de support (14c) englobe des premier et deuxième trous (47, 48) qui y sont formés et positionnés sur des côtés opposés à travers l'élément coulissant (39).

12. Unité de puissance (13) selon l'une quelconque des revendications précédentes, comprenant en outre une plaque à came (41) comportant une surface à came (41b) s'étendant dans une direction orthogonale à la direction de glissement de l'élément coulissant (39), et dans laquelle est formée une rainure à came (62), la plaque à came (41) étant adaptée pour glisser ensemble avec l'élément coulissant (39) ; dans laquelle :
le premier élément rotatif (51) comporte une surface à came dans laquelle est formée une rainure à came (61) et faisant face à la surface à came (41b) de la plaque à came (41) ; et
l'unité de puissance (13) comprend en outre une bille (60) agencée entre la rainure à came (62) de la plaque à came (41) et la rainure à came (61) du premier élément rotatif (51), la bille (60) étant adaptée pour entraîner le glissement de la plaque à came (41) dans la direction de glissement de l'élément coulissant (39) lors de la rotation du premier élément rotatif (51).

13. Unité de puissance (13) selon la revendication 12, dans laquelle la plaque à came (41) est agencée au niveau d'une extrémité externe de l'élément coulissant (39), le premier élément rotatif (51) étant agencé sur un côté interne par rapport à la plaque à came (41).

14. Unité de puissance (13) selon l'une quelconque des revendications précédentes, dans laquelle :
le premier élément rotatif (51) et l'élément coulissant (39) sont connectés l'un à l'autre de sorte à glisser d'une seule pièce dans la direction de glissement de l'élément coulissant (39) ;
le premier élément rotatif (51) englobe une partie de bossage (51b) ;
l'unité de puissance (13) comprend en outre un élément de support (14c) pour supporter l'élément coulissant (39), l'élément de support (14c) comportant un trou de guidage (95) qui y est formé, dans lequel est insérée la partie de bossage (51b) ; et
la partie de bossage (51b) et le trou de guidage (95) comportant chacun un mécanisme à came qui y est formé pour guider le premier élément rotatif (51) dans la direction de glissement de l'élément coulissant (39) lors de la rotation du premier élément rotatif (51).

15. Unité de puissance (13) selon l'une quelconque des revendications 2 à 14, dans laquelle :
le premier élément rotatif (51) comporte des premières dents d'engrenage (57a) qui y sont formées ; et
le deuxième élément rotatif (52) comporte des deuxièmes dents d'engrenage (52a) qui y sont formées, engrenées dans les premières dents d'engrenage (57a) dans un plan orthogonal à la direction de glissement de l'élément coulissant (39).

16. Unité de puissance (13) selon l'une quelconque des revendications précédentes, dans laquelle :
l'élément élastique (67) est configuré de sorte que lorsque le dispositif opérationnel (9) se trouve dans une position de retour située sur un côté de retour par rapport à la position du début de débrayage, l'élément élastique (67) pousse le premier élément rotatif (51) dans une direction d'embrayage de l'embrayage à friction (30), et lorsque le dispositif opérationnel (9) est déplacé de la position de retour vers la position de débrayage à travers la position de début de débrayage, une direction de la force de poussée exercée sur le premier élément rotatif (51) passe de la direction d'embrayage de l'embrayage à friction (30) à la direction de débrayage de l'embrayage à friction (30) ; et
l'unité de puissance (13) comprend en outre un élément élastique d'annulation (80) destiné, lorsque le dispositif opérationnel (9) se trouve dans la position de retour, à appliquer une force élastique pour annuler la force de poussée de l'élément élastique (67) appliquée au premier élément rotatif (51).

17. Véhicule du type à enfourcher (1) comprenant une unité de puissance (13) selon l'une quelconque des revendications précédentes.
